# EUROPEAN PATENT APPLICATION

(11) **EP 4 659 924 A1**
(43) Date of publication of application: **10.12.2025**
(21) Application number: 25176119.3
(22) Date of filing: 13.05.2025
(51) Int. Cl.: B27N 1/02, B27N 3/00, C08L 75/12, C09J 189/00, B27N 3/24, C08G 69/10, C08G 18/70, B27N 3/02, B27N 3/04, B27N 1/00

(54) **GLUE FOR LIGNOCELLULOSIC MATERIAL AND METHOD OF MANUFACTURING SAID GLUE**

(30) Priority: 07.06.2024 EP 24180699; 26.06.2024 US 202463664244 P; 19.07.2024 US 202463673200 P; 22.11.2024 US 202463723610 P
(71) Applicant: Unilin, BV, 8710 Wielsbeke (BE)
(72) Inventor: NEL, Koen, 8710 Wielsbeke (BE); MOUTON, Kenny, 8710 Wielsbeke (BE); VANCOILLIE, Gertjan, 8710 Wielsbeke (BE)
(74) Representative: Unilin Technologies

(57) **Abstract**

A glue for lignocellulosic material, wherein said glue is made up of several components, said components at least comprising:
-a first component which is a dispersion of at least a raw material comprising amino acids and/or molecules containing amino acids, in water;
-a second component comprising isocyanates;
-a third component comprising tackifiers;
and method for manufacturing said glue and board material comprising said glue.

## Description

The present invention relates to a glue for lignocellulosic material, wherein said glue is made up of several components, said components at least comprising:
- a first component which is is a dispersion of at least a raw material comprising amino acids and/or molecules containing amino acids, in water;
- a second component comprising isocyanates;

This invention also relates to a method for manufacturing a said glue, to a method for manufacturing board material with such a glue and to a board material.

This invention relates to boards obtained from board material, such as particle boards, oriented strand boards (OSB), fiber boards, for example wood fiber boards such as MDF (medium-density fiberboard) or HDF (high-density fiberboard) or plant fiber boards such as flax boards or hemp boards, plywood, high pressure laminate (HPL) or compact laminate. This invention can also relate to panels comprising a substrate, such as a particle board substrate or a wood fiber board substrate, which is derived from a said board material, and at least one decorative layer and/or protective layer, wherein said panels can be floor panels, furniture panels, wall panels or construction panels. This decorative layer can comprise one or several paper layers impregnated with a resin and/or a timber layer and/or thermoplastic layers and/or other layers. Said protective layer can be a resin impregnated paper and/or a lacquer layer and/or a coating. Preferably this invention relates to particle boards and to wood fiberboards or panels comprising particle board or wood fiberboard. Another term for particle boards is chip boards.

Said board material is often manufactured by pressing, for example in a continuous press or in a discontinuous press. The pressing conditions, such as time, pressure and temperature have a major influence upon the quality of the board material. Of course the choice of the materials to form said board material also has a major influence. The internal bond, the bending strength and the density, are important characteristics. The aim is to obtain board material with the desired characteristics, thus good quality board material, and this in a sustainable, healthy and economic manner. Preferably the speed of production is as high as possible. During production of said board material, there can be emissions of harmful substances, such as formaldehyde. These emissions are preferably as low as possible. Also when said board material is being used, for example is being used indoor, it is preferred that the emission of harmful substances is as low as possible. Further it is desirable to make use of high amounts of bio-based and/or recyclable raw material.

A glue often used in the production of said board material is an aminoplast polymer, produced by a polycondensation reaction from urea and formaldehyde to a urea formaldehyde glue (UF glue). Optionally melamine is added and a melamine urea formaldehyde glue (MUF glue) is obtained, or melamine and/or phenol are added, for example to obtain melamine urea phenol formaldehyde glue (MUPF glue). The great advantages of these glues are their low cost - on account of the use of generally available and cheap raw materials in their preparation -; and their high reactivity, such that high production speeds can be obtained. Glues of this kind may release formaldehyde during and after polymerization, under the effect of temperature, moisture, or pH change. Formaldehyde-free glues for producing the aforementioned boards have been found, but it is not possible or more difficult to obtain a sufficient speed of production and/or these formaldehyde-free glues can have safety issues and/or production issues can be present.

For the production of HPL and compact laminate, glues are used to impregnate/coat the paper layers/cardboards layers of said HPL/compact laminate during production. Said glues are often indicated as resins. The terms "glue" and "resin" are used interchangeably in this application. Glues comprising formaldehyde, such as melamine glues (melamine formaldehyde glues, MF glue) and/or phenol glues (phenol formaldehyde glues, PH glues) are often used. The drawback of these glues is that they can be the cause of high formaldehyde emissions and/or use of said glues during production poses safety risks. Formaldehyde-free glues have been and are being sought for the production of above-mentioned laminates.

Formaldehyde-free glues, such as glues comprising polymeric methylene diphenyl diisocyanate (pMDI), are known. For example pMDI can be used in combination with water glass, such as described in WO 2024/061769.

It is therefore an object of the invention to have an alternative glue, an alternative method for producing glue, an alternative method for producing board material, alternative board material and/or alternative laminates, which preferably solve one or more of the above mentioned problems.

The invention is described in the claims.

The invention, according to a first aspect, relates to a glue for lignocellulosic material, wherein said glue is made up of several components, said components at least comprising:
- a first component which is is a dispersion of at least a raw material comprising amino acids and/or molecules containing amino acids, in water;
- a second component comprising isocyanates;
wherein said components comprise a third component, said third component comprising tackifiers, said tackifiers preferably being chosen from the list of: glycerol, polyamides, carboxymethyl cellulose, polyvinyl acetate and lignosulfonate.

Surprisingly it has been found that such a glue is very suitable for adhering lignocellulosic material, such as lignocellulosic particles, e.g. wood chips, wood fibers, plant fibers, wood shavings. Such a glue is very suitable for manufacturing board material comprising lignocellulosic particles, such as particle board, wood fiber boards, OSB, flax boards. Such board material is normally manufacturing by first applying glue to the lignocellulosic particles to form glue-coated lignocellulosic material, and then forming a cake comprising said glue-coated lignocellulosic material and then pressing said cake. With the aid of these tackifiers, said glue is able to form a good coherent cake, e.g. a cake with sufficient cold tack, which is very suitable for pressing. Said tackifiers ensure that the lignocellulosic particles coated with said glue, e.g. said glue-coated lignocellulosic material, sticks sufficiently together and is well suited for pressing. Especially when said board material is being made with a continuous double belt press, wherein use is made of prepressing and heat pressing, this glue if very suitable. Since a coherent cake is formed, air can be very well removed during prepressing and the heat pressing can take place in a very good manner.

Said glue can also be used to adhere the different layers of a HPL or a compact board together, e.g. to adhere several paper layers and/or cardboard layers together. Said paper layers and/or cardboard layers being lignocellulosic material. Said glue can then be used to coat/impregnate one or several of papers and/or cardboards. Sufficient tack is also beneficial when forming said HPL or compact boards. This glue can also be used to form a glue-coated wood veneer, or a glue-coated/glue-impregnated paper, which is than applied upon a substrate. Said glue can also be used to adhere textile layers, glass fiber scrims/nets and/or metal foils. For example a laminate can comprise one or more paper layers, optionally a wood-based substrate and/or optionally one/or more metal foils and/or optionally glass fiber scrims/nets and/or optionally textile layers, wherein said glue is then at least used for adhering at least two of said layers together and wherein said glue is optionally used to form said wood-based substrate.

Preferably said tackifiers do not negatively influence the dispersion. Preferably the tackifiers are chosen from the list of: polyols, preferably polyols comprising at least two hydroxyl groups or at least three hydroxyl groups, such as glycerol or pentaerytritol - C(CH₂OH)₄-, amines with at least two amine end groups, preferably at least three amine end groups, polyamides, carboxymethyl cellulose, lignosulfonate, aliphatic polyester, vinyl acetate ethylene, (carboxylated) polyvinyl acetate (PVAc), vinyl acetate and vinyl laurate. Very suitable tackifiers are glycerol and/or hyperbranched polyamides. Also carboxymethyl cellulose is a very suitable tackifier.

Said tackifiers can only comprise glycerol. Said tackifiers can only comprise carboxymethyl cellulose.

Said tackifiers can comprise or consist of polyvinyl acetate. Surprisingly it has been found that not only a more coherent cake can be formed with PVAc, also the amount of isocyanates can be reduced. Polyvinyl acetate will also positively influence the binder characteristics of the glue. Up to 20 wt% of the isocyanates of the second component can be substituted by polyvinyl acetate without negatively influencing the glue properties. For example 10 wt% or 15 wt% of the isocyanates can be substituted by polyvinyl acetate. Thus instead of the glue preferably comprising between 15 and 25 wt% of isocyanates, the glue can preferably comprise between 12,0 and 22,5 wt% of isocyanates and between 1,5 and 5 wt% of PVAc. Further, it has been found that by substituting part of the isocyanates with polyvinyl acetate, for example by substituting between 7 and 17 wt% of the isocyanates with polyvinyl acetate, the use of other tackifiers is no longer necessary to have sufficient cold tack.

Said tackifiers can only comprise polyamides. Said polyamides are preferably obtained by polymerisation of amino acids, for example amino acids chosen from the list of: lysine, arginine, glutamine, asparagine, histidine. Said polyamides can be polylysine. Said polyamides are preferably hyperbranched polyamides, such as hyperbranched polylysine. The benefit of having said hyperbranched polyamides is that these not only improve the characteristics of the cake with regard to pressing, but that said hyperbranched polyamides are capable of scavenging formaldehyde. Said hyperbranched polyamides are thus not only tackifiers, but also function as formaldehyde scavengers. Such a glue therefore is also very beneficial to form low formaldehyde HPL, compact board, fiberboard and particle board.

Said glue preferably does not comprise formaldehyde. However formaldehyde-emission can also be the result of the used lignocellulosic material. Lignocellulosic material naturally comprises formaldehyde. Said lignocellulosic material can comprise a certain amount of recycled lignocellulosic material, which can have higher amounts of formaldehyde than virgin lignocellulosic material. Said recycled material can be derived from solid wood waste, particle board waste, wood fiber board waste, etc. For the production of particle boards, it is known to make use of wood chips derived from old particles boards and/or other wood waste. This recycled material often comprises a higher amount of formaldehyde and/or emits a higher amount of formaldehyde. This means that, even when formaldehyde-free glues are used, formaldehyde-emissions remains an issue. Said hyperbranched polyamides will remove/neutralize formaldehyde during production and/or when using manufactured products.

Said tackifiers can comprise a combination of glycerol and polyamides, preferably a combination of glycerol and hyperbranched polyamides, such as hyperbranched polylysine. The benefit of such a combination is that the glue can provide a said cake with sufficient coherent properties and this while keeping formaldehyde emissions during production with said glue or formaldehyde emissions of products comprising said glue, sufficiently low.

With isocyanates can be indicated isocyanates and/or derivates of isocyanates. With derivates of isocyanates can be indicated isocyanates which have been chemically altered to provide said isocyanates with certain characteristics, e.g. to improve the emulsification of said isocyanates in water and/or to make the isocyanates more or less reactive. The derivates of isocyanates can be emulsifiable isocyanates. The second component comprises said isocyanates. Preferably the second component comprises substantially isocyanates, for example comprises at least 80 wt% of isocyanates, preferably comprises at least 90 wt% of isocyanates, more preferably comprises at least 95 wt% of isocyanates, most preferably at least 99 wt% of isocyanates. The second component can also consist of isocyanates. Preferably said second component is a liquid with the isocyanates being present in liquid form.

Said isocyanates preferably have an NCO value of at least 28%, more preferably at least 30%, for example 31% or 32%. This can be measured by DIN EN ISO 14896:2009 for the determination of the isocyanate content.

The first component is a dispersion, with said raw material being dispersed in the water. The first component can also comprise further raw materials, which can also be dispersed in the water.

The glue as such is preferably a water-based dispersion, with the raw material and the isocyanates being dispersed in the water. Preferably said glue comprises between 40 and 70 wt% of water, for example between 45 and 65 wt% of water.

When said glue is used to form board material and/or laminate, said glue will normally be cured, for example with aid of heat pressing in a discontinuous press -e.g. a single daylight press or a multidaylight press-, or in a continuous press -e.g. in a double belt press or between pressing rolls-. This glue can thus be used for a method for manufacturing a board material, such as a particle board material, a wood fiberboard material, an OSB material, a plywood. This glue can however also be used for a method for manufacturing a board material, such as a HPL or a compact board. This glue can be used for a method for manufacturing a decorative panel, wherein glue is used to form a glue-coated wood veneer, or a glue-coated/impregnated paper, which is than applied upon a substrate, and/or wherein a said glue is used to form a board material, such as a fiberboard or particle board, wherein a decorative layer is then applied upon said board material.

Preferably said isocyanates are present in dispersed form in the glue, more preferably in emulsified form. This ensures that the isocyanates in the glue are well distributed throughout the glue. When said isocyanates are present in dispersed form in the glue, lower amounts of isocyanates can be used to obtain board material with the desired characteristics, this because said isocyanates can be homogeneously spread upon the lignocellulosic material. Isocyanates are harmful substances in production, such that precaution measures need to be taken when using this material. For example sufficient ventilation is needed and trained personnel is needed. Further isocyanates are often not bio-based, such that lower amounts of isocyanates are desirable. Said raw material with amino acids and/or molecules containing amino acids, can more easily be bio-based. For example said raw material can comprise grinded plant material, such as plant flours or can comprise polyamides obtained by polymerisation of amino acids, such as polylysine. Plant flours can be pea flour, guar flour, canola flour, wheat flour, etc. Polylysine can be obtained by polymerisation of substantially lysine and optionally other amino acids, wherein said lysine and optionally other amino acids can be produced by microorganisms. Said pea flour can for example comprise the following (based on dry matter weight): 23 wt% of proteins, 48 wt% of starch, 4 wt% of lipids, 3 wt% of ash and 8 wt% of sugar. Thus the raw material comprising amino acids and/or molecules containing amino acids can also comprise other molecules and the amino acids and/or molecules containing amino acids can be less than 50 wt% of the total dry matter weight of the raw material. With a raw material comprising amino acids and/or molecules containing amino acids, is thus only indicated that said raw material has amino acids and/or molecules containing amino acids. Preferably said raw material comprises at least 15 wt% of amino acids and/or molecules containing amino acids.

Preferably, the dispersion of said isocyanates in the glue, is such that 99 wt% of the isocyanates have a particle size/droplet size of less than 10 micrometer, preferably less than 5 micrometer, preferably less than 1 micrometer. This can be measured by laser scattering and/or dynamic light scattering.

The presence of isocyanates is beneficial for the water resistant properties of board material produced with this glue.

In a preferred embodiment the raw material comprises a powder, wherein said powder comprises at least proteins and preferably also carbohydrates. Said raw material can be powder comprising at least proteins and preferably also carbohydrates. Preferably said powder comprises proteins and carbohydrates. The proteins are then said molecules containing amino acids. The proteins can or cannot be denaturated proteins and/or can or cannot be fermented proteins. For example said raw material can comprise proteins and/or denaturated proteins and/or fermented proteins. This powder can be obtained by grinding a plant raw material, such as cereals (for example, wheat, rye, barley, millet, rice or oats), maize, beets, nuts (for example, palm nuts or coconuts), seeds (for example, rapeseed, linseed or sunflower seeds) or legumes (for example, soybeans, peas, beans, faba beans), guar plant, canola. The powder can be a combination of two or more of the above. More preferably the powder is obtained by grinding (waste from) agricultural crops, for example (waste from) pulse beans, such as soybeans, peas, faba beans. With waste from agricultural crops can be indicated the plant material that is not used for human and/or animal consumption, e.g. the stems of a (pulse bean) plant. The powder can be a flour, such as cereal flour (for example, wheat, rye, barley, millet, rice or oats), low-grade flour, maize flour, beet flour, nut flour (for example, palm nuts or coconuts), seed flour (for example, from rapeseed, linseed or sunflower seeds) or legume flour (for example, from soybeans, peas, beans, faba beans), guar flour, canola flour. The powder can be a combination of two or more of the above. As generally known, the term flour is used for a powder obtained from grinding a plant raw material. A particularly interesting kind of flour for use in the invention is the so-called 'low-grade flour', which is a residual material of the wheat flour production. Due to the browner colour of the low-grade flour, this product is declared unsuitable for the production of wheat bread and is processed as animal feed. Low-grade flour has a higher ratio of proteins to carbohydrates compared to the grain from which it is obtained. Higher ratios of proteins to carbohydrates can lead to better adhesive properties. A preferred embodiment is characterized in that the powder is obtained by a process in which a fermentation is performed on a plant raw material. This allows to prepare the powder from residual/waste flows from the agricultural industry and thus improves the valorisation of these residual/waste flows. In such fermentation processes, microorganisms such as fungi or bacteria convert natural raw materials into powders in aqueous suspension. These powders have a homogeneous combination of carbohydrates and proteins. In the powder, the ratio by mass of the proteins to the mass of the carbohydrates is preferably between 2:1 and 1:30; preferably between 1.5:1 and 1:15, more preferably between 1:2 and 1:10. Typically said powder comprising carbohydrates and proteins, for example said flour, has only limited solubility in water. As a result, the first component is a suspension, with the powder dispensed in the water, with a sufficiently low viscosity and a sufficiently high solid content. This allows the glue to be sufficiently distributed over the lignocellulosic material, for example by spraying or nebulizing the glue. The first component can be produced by placing the powder in water with the aid of high shear or turbulence, as such forming an aqueous suspension of the powder.

If the raw material is powder comprising carbohydrates and proteins, the D₅₀ value of the particle size distribution by volume of the powder in the first component, measured by laser diffraction (Beckman Coulter laser diffraction device LS 13320), can be less than 200 micrometers, preferably less than 100 micrometers, more preferably less than 50 micrometers, even more preferably less than 30 micrometers. The D₅₀ value is the particle size - expressed in microns - wherein 50 % of the particles are smaller than this value. These embodiments provide better glue stability and good glue efficiency. A preferred embodiment of the first aspect of the invention is characterized in that the D₉₀ value of the particle size distribution by volume of the powder in the first component, measured in by laser diffraction, is less than 200 micrometers, preferably less than 100 micrometers. The D₉₀ value is the particle size - expressed in microns - wherein 90 % of the particles are smaller than this value.

Further preferably, the powder is a flour. Said flour can be a fermented flour, a denaturated flour or a fermented and denatured flour. With the aid of fermentation and/or the denaturation the present proteins can be present in their primary, secondary or tertiary structure. The presence of proteins in their quaternary structure is however not excluded, but it is preferable that no or virtually no proteins are present in their quaternary structure. In the quaternary structure, the reactive groups of the protein are shielded. In the tertiary structure, there are already fewer shielded reactive groups, in the secondary structure there are even fewer shielded reactive groups, and in the primary structure all of the reactive groups are readily accessible. The reactivity of the glue is also higher the more proteins are in their primary, secondary or tertiary structure.

In a very preferred embodiment, for the first component, the weight ratio of the water to the raw material is between 0,75 and 3, preferably at most 2,5 and/or preferably at least 1. Preferably, for the first component, the weight ratio of the water to the powder, e.g. the flour, is between 0,75 and 3, preferably at most 2,5 and/or preferably at least 1. Surprisingly, it has been found that with these ratio's the glue is very stable and has a good shelf life, e.g. a shelf life of more than 24 hours or more preferably of more than 5 days. With such an amounts of water, the isocyanates, for example the pMDI will not react with water in such a way that the reactivity of the pMDI is lost. Further in a specific embodiment, the glue can also comprise an additional component being water glass. Said water glass comprises water, however said water is not taken into account for the abovementioned ratio. Preferably, if waterglass is present, for the glue, the weight ratio of the raw material to the total amount of water -being the water present in the water glass and the additional water- is between 0,68 and 2,95.

**In** a specific embodiment the raw material comprises polyamides which are obtained by polymerization of amino acids, for example hyperbranched polyamides such as hyperbranched polylysine. Said polymerisation of said amino acids into polyamides is the result of polymerisation reactions, for example is the result of polycondensation. Said amino acids are preferably bio-based, such that the glue is a bio-based resin. For example said amino-acids can be produced with the aid of bacteria. Bacteria, such as Corynebacterium (gram-positive) or Escherichia coli (gram-negative), can produce amino acids by fermentation, for example can predominantly produce lysine or other amino acids. Said other amino acids can be glutamine, histidine, arginine, asparagine. Hyperbranched polyamides (highly branched polyamides) are highly branched three-dimensional macromolecules. High/strong branching means that the polyamides are not linear and it also means that there is a significant number of branchings. This signifies that more than 3, preferably more than 5 and even more preferably more than 10 branchings are present in the polyamide macromolecule. Said hyperbranched polyamides are based on amino acids, for example polycondensed amino acids, wherein these amino acids are for example produced with the aid of bacteria. These are then bio-based hyperbranched polyamides. When use is made of bacteria that for example form mainly lysine and a small proportion of other amino acids such as glutamine, both the lysine and the glutamine can be used for the production of the hyperbranched polyamides, so that an additional purification step of the amino acids is superfluous and the production of the hyperbranched polyamides can take place in an ecological manner. If the amino acids substantially comprise lysine or for example comprise at least 80 weight percentage, preferably at least 90 weight percentage, of lysine, said hyperbranched polyamides can be indicated as hyperbranched polylysine. Said hyperbranched polylysine therefore does not have to consist of lysine, but can also comprise other amino acids and/or other molecules, such as crosslinkers. The isocyanates of the second component function as crosslinkers for said polyamides, and can also adhere to hydroxylgroups of lignocellulosic material.

Preferably, for the glue, the weight ratio of the first component is between 65 and 85 wt%, wherein preferably said first component consists of the raw material and water.

In a preferred embodiment, for the glue, the weight ratio of the second component is between 15 and 25 wt%, wherein preferably the second component consists of said isocyanates.

The glue itself is preferably made by adding the following together (based on the total weight of the glue):
1) between 15 and 30 wt% of a powder comprising carbohydrates and proteins, such as a flour, for example between 17 and 25 wt%, with said powder being the raw material comprising amino acids and/or molecules containing amino acids and this because proteins are molecules containing amino acids;
2) between 40 and 70 wt% of water, for example between 45 and 60 wt%;
3) between 3 and 10 wt% of water glass, for example water glass 40%, preferably between 4 and 9 wt% of water glass 40%. Water glass being a combination of Na₂O and SiO₂ in water, and with 40% indicating that there is 60% by weight of water and 40% by weight of solid matter;
4) between 15 and 25 wt% of pMDI, for example between 17 and 22 wt%, with pMDI being said isocyanates of the second component;
5) between 0,5 and 8 wt% of tackifiers;
wherein preferably 1) and 2) form the first component, 3) is added to the first component and 4) forms the second component and 5) forms the third component. With relatively low amounts of pMDI, a glue is obtained with which board material can be manufactured having sufficient bending strength.

The glue itself can also be made by adding the following together (based on the total weight of the glue):
1) between 15 and 30 wt% of a powder comprising carbohydrates and proteins, such as a flour, for example between 17 and 25 wt%, with said powder being the raw material comprising amino acids and/or molecules containing amino acids and this because proteins are molecules containing amino acids;
2) between 40 and 70 wt% of water, for example between 45 and 60 wt%;
3) between 3 and 10 wt% of water glass, for example water glass 40%, preferably between 4 and 9 wt% of water glass 40%. Water glass being a combination of Na₂O and SiO₂ in water, and with 40% indicating that there is 60% by weight of water and 40% by weight of solid matter;
4) between 13,5 and 22,5 wt% of pMDI, for example between 15 and 20 wt%, with pMDI being said isocyanates of the second component;
5) between 1 and 5 wt% of polyvinyl acetate, for example 2 wt%;
wherein preferably 1) and 2) form the first component, 3) is added to the first component and 4) forms the second component and 5) forms the third component. With relatively low amounts of pMDI, a glue is obtained with which board material can be manufactured having sufficient bending strength.

Preferably, for the glue, the ratio by mass of the isocyanates to the mass of the raw material comprising amino acids and/or molecules containing amino acids, is between 0,6 and 1,4, preferably between 0,8 and 1,2, for example 1. For example if the glue is used for manufacturing a three layered particle board, said three layers can be formed by three layers of glue-coated lignocellulosic material, wherein for the glue used for the outer layers, the ratio by mass of the isocyanates to the mass of the raw material comprising amino acids and/or molecules containing amino acids is between 0,9 and 1,1 and is preferably 1 and wherein for the glue used for the central layer, said ratio is between 0,7 and 0,9, preferably 0,8. This can lower the price of the adhesive, since the second component normally is expensive.

The solid content in the glue is preferably between 25 and 60 % by mass, preferably between 35 and 50 % by mass, for example 40 % or 45 %.

In a very preferred embodiment the glue comprises a fourth component, said fourth component being waterglass. If water glass is present, said water glass is preferably added to the first component, water glass can be added to the said aqueous dispersion of the raw material in water. The water glass can interact with the raw material, before said glue is used for forming board material. This results in a moderate increase of viscosity and an activation of the raw material. This activation also ensures that the dispersing capacity of the raw material is increased and that the addition of the second component at a later stage leads to a homogeneous and stable dispersion. It is an important advantage of the invention that a stable dispersion of the isocyanates in water is obtained. The combination of the raw material and the water glass thereby acts as a dispersant for the isocyanates. Addition of the water glass provides for an increased adhesive strength of the raw material. When said raw material is a powder comprising proteins and carbohydrates, e.g. is a flour, when said glue is subjected to pressing at elevated temperature, the proteins of the powder are denatured and the carbohydrates lose their crystallinity. Functional groups are also released at this elevated temperature, mainly on the proteins, as a result of which the water glass connected to the powder undergoes a hardening reaction. These functional groups are therefore latent at low temperatures and are only expressed when the glue is heated to temperatures above 50 °C. Since the water glass will also contribute to the adhesive strength, the amount of the isocyanates can remain limited. The amount of water glass is therefore preferably chosen such that the water glass is not only active as a dispersant, but also to a significant extent as an adhesive component. This allows us to use less isocyanates, and therefore to obtain a more sustainable and less harmful glue, which can be well dosed and uniformly distributed. It is an important advantage of the invention that the isocyanates not merely act as a chain extender of the powder, but that it is also capable of reacting with the hydroxyl groups of the lignocellulosic material to improve adhesive strength. The water glass can moreover lead to an improvement of the reactivity of hydroxyl groups of wood on the one hand, and the isocyanates on the other hand. The water glass is thus not only active as an emulsifier for the isocyanates. When using the glue and while elevating the temperature during pressing and after evaporation of the water, the dispersion is broken, and the water glass can act as a catalyst for the reaction of the isocyanates with the hydroxyl groups of the lignocellulosic material.

Said water glass is a combination of Na₂O and SiO₂ in water. The (molar) ratio between SiO₂:Na₂O, and the mass of solids of the water glass (in water) can vary. For example, water glass 2.0 has a SiO₂:Na₂O molar ratio of 2.0:1. Consequently, 1 gram of water glass 2.0, with a solid content of 40 % by mass, contains 0.13 gram of solid Na₂O. Water glass 3.4, for example, has a SiO₂:Na₂O molar ratio of 3.4:1. Consequently, 1 gram of water glass 3.4, with a solid content of 37 % by mass, contains 0.084 grams of solid Na₂O. Solid sodium silicate typically has a high Na₂O content, which dissolved in water corresponds to water glass 1.0 to 1.5, or in other words a SiO₂:Na₂O molar ratio of 1.0:1 to 1.5:1. In the context of the present invention, "solid content" refers to the percentage by mass of the solids, unless stated otherwise. It has been found that the presence of water glass enhances the emulsification of the isocyanates. This is especially useful if the isocyanates comprise di-isocyanates and/or multi-isocyanates, such as pMDI. If the isocyanates comprise emulsifiable isocyanates, use of water glass can be omitted, however, the presence of water glass can further enhance the emulsification of the emulsifiable isocyanates. Preferably the ratio by mass of the raw material comprising amino acids and/or molecules comprising amino acids, to the mass of solid Na₂O of the water glass is between 60:1 and 6:1, preferably between 50:1 and 7:1, more preferably from 40:1 and 8:1. Said ratio also ensures good water resistance.

In a very preferred embodiment, the weight ratio tackifiers upon the total weight of the glue is between 0,5 % and 8 %. With such an amount of tackifiers, the glue can have a sufficient cold tack, and this without the need for very high amounts of water, such that this glue is very suitable for adhering lignocellulosic material, such as papers or plant particles, e.g. wood chips or wood fibers, together. Preferably the weight ratio tackifiers upon the total weight of the glue is at least 1 wt%, more preferably at least 2 wt% and/or is at most 6 wt%, more preferably at most 5 wt%.

In a very preferred embodiment, when the glue is being used to glue wood chips and/or wood fibers together to form board material, the weight ratio tackifiers upon the dry matter weight wood can be between 0,1 and 5 wt%. For example if the tackifiers comprise or consist of carboxymethyl cellulose, then the weight ratio carboxymethyl cellulose upon the dry matter weight wood is preferably between 0,1 and 1 wt%. For example if the tackifiers comprise or consist of ligno sulfonate, then the weight ratio ligno sulfonate upon the dry matter weight wood is preferably between 1 and 5 wt%.

In a preferred embodiment, the glue comprises a fifth component, different from said other components, wherein said fifth component comprises formaldehyde scavengers. Said formaldehyde scavengers are preferably chosen from the list of: scavengers comprising sulphite, such as metabisulphite, bisulphite, e.g. sodium metabisulphite, sodium bisulphite, sodiumsulphite or potassium metabisulphite, potassium bisulphite or potassium sulphite, or scavengers comprising urea, or scavengers comprising hyperbranched polyamides obtained by polymerisation of amino acids. Other possible scavengers are tannines, ammonium salts, melamine, acetoacetamide, polyamine, compounds containing a bisulphite anion, compounds containing free or protected primary/secondary amines. Urea can function as formaldehyde scavenger, but can also aid dispersion of the raw material in the first component. Said scavengers can comprise a combination of above-mentioned scavengers. If said scavengers comprise hyperbranched polyamides obtained by polymerisation of amino acids, the said raw material of the first component is preferably a powder comprising proteins and carbohydrates, e.g. a flour. Said scavengers are preferably present in the glue in an amount of between 0,5 wt% and 8 wt%. Preferably the weight ratio scavengers upon the total weight of the glue is at least 1 wt%, more preferably at least 2 wt% and/or is at most 6 wt%, more preferably at most 5 wt%. Said glue preferably does not comprise formaldehyde. However formaldehyde-emission can also be the result of the used lignocellulosic material. Lignocellulosic material naturally comprises formaldehyde. Said lignocellulosic material can comprise a certain amount of recycled lignocellulosic material, which can have higher amounts of formaldehyde than virgin lignocellulosic material. Said recycled material can be derived from solid wood waste, particle board waste, wood fiber board waste, etc. For the production of particle boards, it is known to make use of wood chips derived from old particles boards and/or other wood waste. This recycled material often comprises a higher amount of formaldehyde and/or emits a higher amount of formaldehyde. This means that, even when formaldehyde-free glues are used, formaldehyde-emissions remains an issue. To avoid harmful emissions, scavengers can be added to the glue. During manufacturing said glue, said scavengers are preferably added as a final component, or at least after adding the second component to the first component to form the glue. Said scavengers remove/neutralize harmful substances, such as formaldehyde, during production and/or when using said board material. If said glue is used to adhere lignocellulosic particles together, such as wood chips or wood fibers, instead of adding scavengers to the glue, or in addition to adding scavengers to the glue, said scavengers can be scattered during cake formation with glue-coated lignocellulosic particles. For example if a multi-layered cake is formed comprising at least two layers of glue-coated lignocellulosic material, said scavengers can be scattered such that the scavengers are substantially present between said two layers of glue-coated lignocellulosic material. The benefit is that less or no scavengers can be present in the glue, such that said scavengers do not negatively influence the glue, e.g. by having unwanted reactions with components of the glue.

The isocyanates are preferably chosen from the list of: di-isocyanates and multi-isocyanates, wherein the isocyanates preferably comprise polymeric methylene diphenyl diisocyanate (pMDI). Said di-isocyanates and multi-isocyanates can also be derivates of di-isocyanates and derivates of multi-isocyanates. With derivates of di-isocyanates or derivates of multi-isocyanates are indicated di-isocyanates or multi-isocyanates which have been chemically altered to alter the reactivity. Alternatively or in addition, said isocyanates are emulsifiable isocyanates, for example emulsifiable polymeric methylene diphenyl diisocyanate (eMDI). Emulsifiable isocyanates are isocyanates which have been chemically altered to enhance emulsification in water.

The benefit of having di-isocyanates or derivates of di-isocyanates, is that these have two active isocyanate groups, such that their reactivity is sufficiently high, and pressing times can be reduced. However the reactivity is not too high, such that unwanted prepolymerisation is low.

In a specific embodiment of the first aspect of the invention, the isocyanates are polymers of methylene diphenyl diisocyanate (MDI), for example polymeric methylene diphenyl diisocyanate (pMDI). A limited amount of isocyanates is needed if use is made of such isocyanates. pMDI is preferred. Unlike many other isocyanates, pMDI has little to no compatibility with water. In many other types of isocyanates, water can react with the isocyanate groups, resulting in the release of carbon dioxide. Since pMDI and water show little or no compatibility, there is only a limited reaction when water and pMDI come into contact. Moreover, pMDI has a large number of reactive groups per molecule. This is advantageous for the adhesive strength since a dense network of crosslinking can be obtained.

The isocyanates are preferably present in dispersed form in the glue, more preferably are present in emulsified form in the glue.

In a specific embodiment, the glue comprises additives, such as water-repellent additives and/or fire-retardant additives. If additives are present or not, and which additives are present, depends on the use of the glue. For example if the glue is used to produce wood fibers boards with improved water-resistant properties, the glue can comprise water-repellent additives. If the glue is used to produce fire-resistant particle boards, the glue can comprise fire-retardant additives.

Other additives are also possible. For example, the glue can comprise one or more of additives chosen from the list of:
- water-repellent additives;
- fire-retardant additives;
- wetting agents;
- denaturants;
- catalysts;
- hardeners;
- wax, e.g. a wax emulsion.

The wax is preferably a paraffine wax and/or is preferably a wax emulsion. Wax is useful when the glue is used to adhere lignocellulosic material, such as wood fibers or wood chips. Said glue is applied upon said lignocellulosic particles to form glue-coated lignocellulosic particles. With the aid of wax, said glue-coated lignocellulosic particles can very well form a coherent cake before pressing said glue-coated lignocellulosic material. If the lignocellulosic material is wood chips, preferably between 0,4 and 1 wt% or between 0,1 and 0,5 wt% of wax upon dry matter lignocellulosic material is present in said glue-coated lignocellulosic material, for example 0,6 wt%. Further said wax enhances the water-resistant properties of the board material. Instead of the glue comprising wax, or in addition of the glue comprising wax, said wax can be applied upon the lignocellulosic particles before applying the glue upon the lignocellulosic particles.

The water-repellent additives can be chosen from the list of:
- a silicon containing compound, such as fumed silica or silanes or polysiloxanes;
- a metallic soap;
- a thermoplastic material;
- inorganic fillers such as CaCO₃, talc, vermiculite.

Said thermoplastic material can be chosen from the list of: polyvinyl butyral (PVB), ethylene vinyl acetate (EVA), polyvinyl alcohol (PVA), polybutylene succinate (PBS), polyvinyl chloride (PVC), polymethyl methacrylate (PMMA), polyurethane (PU), polypropylene (PP) and polyethylene (PE). Said metallic soaps preferably comprise an aliphatic chain comprising at least 8 carbons, more preferably at least 12 carbons and most preferably at least 16 carbons. More preferably said metallic soaps also comprise one, two or more shorter aliphatic chains, e.g. aliphatic chains with at most 6 carbons, preferably at most 4 carbons. Said metallic soaps can be obtained from animal fats or plant/vegetable fats. The metallic soaps are preferably zinc metallic soaps or calcium metallic soaps or magnesium metallic soaps. An example of possible metallic soaps is zinc stearate. Metallic soaps can contribute to the water resistance of a board material comprising said glue, but can also enhance the soap resistance of a said board.

The fire-retardant additives are preferably chosen from the list of: phosphates, such as ammonium phosphates or magnesium phosphates or aluminum phosphates, sulphates, such as magnesium sulfate, sulfamates, aluminum trihydrate, huntite, magnesite, antimony oxide, borax, phosphorous salts. The fire-retardant additives can or cannot be a combination of the above mentioned examples. Instead of the glue comprising fire-retardant additives, or in addition of the glue comprising fire-retardant additives, said fire-retardant additives can be applied upon lignocellulosic particles before applying the glue upon the lignocellulosic particles. Said fire-retardant additives can also be scattered upon glue-coated lignocellulosic particles.

The denaturants can be chosen from the list of: aldehydes, such as glyoxal or hexamethylene diamine (HDMA), urea, urease or other enzymes, sulphites or sulphates. If the raw material comprises proteins, said denaturants can help to enhance the dispersion of said proteins into water, and this by denaturing the proteins, preferably in a small amount. Said denaturants are preferably added to the first component, before adding the second component to the first component.

Some additives can have multiple functions, e.g. wax can improve the formation of a coherent cake and can enhance the water-repellent properties and it can help in preventing dehydration of the glue-coated lignocellulosic material.

It is not excluded that the glue contains additional additives, such as hardeners to improve the curing, such hardeners can be based on for example carbodiimides, aziridine, epoxy, etc. Other possible additives are colorants, pigments, antifungal additives and antimicrobial additives, thermoplastic additives with adhesive properties -preferably a bio renewable thermoplastic additive, such as an aqueous dispersion of polylactic acid or a natural latex-. The use of thermoplastic additives with adhesive properties allows to reduce the amount of isocyanates. The additives can also comprise catalysts to accelerate and improve the reaction between the hydroxyl groups of the lignocellulosic material and the isocyanates, such as are tertiary amines and derivatives of tin.

Preferably said additives take up at most 3 wt% of the total weight of the glue.

According to a first variant of the first aspect of the invention, the feature "a third component comprising tackifiers" is an optional feature. All the preferred embodiments of the glue of the first aspect of the invention with regard to the first component, the second component and/or possible additives apply mutatis mutandis for the glue of the first variant of the first aspect of the invention.

The invention, according to a second aspect of the invention, relates to a method for manufacturing a glue for lignocellulosic material, wherein said method comprises at least the following steps:
- a first step wherein at least a raw material comprising amino acids and/or molecules containing amino acids, is dispersed in water, to form a first dispersion;
- further steps wherein at least isocyanates and tackifiers are dispersed in said first dispersion to form said glue;
wherein preferably said further steps comprise
- a second step wherein the isocyanates are dispersed in said first dispersion, to form a semi-finished glue;
- a third step wherein the tackifiers are added to said semi-finished glue to form said glue; wherein said tackifiers are preferably chosen from the list of: glycerol, polyamides, carboxymethyl cellulose, PVAc and ligno sulfonate.

If said tackifiers comprise PVAc, adding said isocyanates and said PVAc can be done simultaneously or PVAc can be added to the first dispersion before adding the isocyanates or PVAc can be added to the first dispersion after adding the isocyanates.

With the aid of said method, preferably a glue according to the first aspect of the invention is obtained. The first dispersion can be the first component of the first aspect of the invention. Preferably said isocyanates are the second component of the first aspect of the invention. Preferably said tackifiers are the third component of the first aspect of the invention. Preferred and specific embodiments of the first aspect of the invention and also variants and/or alternatives of the first aspect of the invention, apply mutatis mutandis for the second aspect of the invention, and vice versa. Here preferably the first dispersion is the first component of the first aspect of the invention. Dispersing the isocyanates in said first dispersion is preferably done by adding the second component comprising isocyanates of the first aspect of the invention, to the first dispersion. Adding tackifiers to said semi-finished glue to form said glue, is preferably done by adding the third component of the first aspect of the invention to semi-finished glue.

Said glue made with this method can thus be used for adhering lignocellulosic material, such as paper layers and/or cardboard layers and/or lignocellulosic particles, together. Said glue can thus be used e.g. for manufacturing board material comprising lignocellulosic particles, such as particle board, wood fiber boards, OSB, flax boards and/or for forming HPL or compact board. Said glue can also be used to form a glue-coated wood veneer. Said glue can also be used to adhere textile layers, glass fiber scrims/nets, metal foils.

By having at least said three separate steps, it is ensured that that the isocyanates, for example the pMDI, get only dispersed, when said raw material is already dispersed in water, such the risk of unwanted prereactions of the isocyanates with the raw material is avoided. By dispersing the isocyanates in the water, unwanted prereactions of the isocyanates and the water are also avoided. Said tackifiers, when being added to the semi-finished glue will not negatively influence the stability of the glue. The shelf life of a glue made according to this method is sufficiently long, preferably longer than 24h, preferably longer than 5 days, such that this glue can be made by preforming said at least three steps in advance for a considerable time, e.g. before using it to glue lignocellulosic material together. Said glue can be made in batch, but can also be made in a continuous process.

Preferably the tackifiers are chosen from the list of: polyols, preferably polyols comprising at least two hydroxyl groups or at least three hydroxyl groups, such as glycerol or pentaerytritol -C(CH₂OH)₄-, amines with at least two amine end groups, preferably at least three amine end groups, polyamides, carboxymethyl cellulose, lignosulfonate, aliphatic polyester, vinyl acetate ethylene, (carboxylated) polyvinyl acetate, vinyl acetate and vinyl laurate.

Said tackifiers can only comprise glycerol.

Said tackifiers can only comprise polyamides. Said polyamides are preferably obtained by polymerisation of amino acids, for example amino acids chosen from the list of: lysine, arginine, glutamine, asparagine, histidine, and/or preferably said polyamides are hyperbranched polyamides, such as hyperbranched polylysine. Said hyperbranched polyamides are capable of scavenging formaldehyde.

Preferably, this method is free from steps wherein formaldehyde comprising molecules are added. Said glue then does not comprise formaldehyde. However, when using this glue to form board material, formaldehyde-emission can also be the result of the used lignocellulosic material. This means that, even when formaldehyde-free glues are used, formaldehyde-emissions remains an issue. If said tackifiers comprise hyperbranched polyamides, said hyperbranched polyamides will remove/neutralize formaldehyde during production and/or when using manufactured products.

Said tackifiers can comprise a combination of glycerol and polyamides, preferably a combination of glycerol and hyperbranched polyamides, such as hyperbranched polylysine. The benefit of such a combination is that the glue can provide a said cake with sufficient coherent properties and this while keeping formaldehyde emissions during production with said glue or formaldehyde emissions of products comprising said glue, sufficiently low.

With isocyanates can be indicated isocyanates and/or derivates of isocyanates. With derivates of isocyanates can be indicated isocyanates which have been chemically altered to provide said isocyanates with certain characteristics, e.g. to improve the emulsification of said isocyanates in water and/or to make the isocyanates more or less reactive. Preferably in the second step only isocyanates are added, wherein said isocyanates are in liquid form. This enhances good dispersion in the first dispersion and ensure that for the semi-finished glue is stable. Alternatively a liquid comprising at least 80 wt% of isocyanates, preferably comprising at least 90 wt% of isocyanates, more preferably comprising at least 95 wt% of isocyanates, most preferably comprising at least 99 wt% of isocyanate is added in said second step, to disperse said isocyanates.

Said isocyanates preferably have an NCO value of at least 28%, more preferably at least 30%, for example 31% or 32%. This can be measured by DIN EN ISO 14896:2009 for the determination of the isocyanate content.

The glue as such is preferably a water-based dispersion, with the raw material and the isocyanates being dispersed in the water. Preferably said glue comprises between 40 and 70 wt% of water, for example between 45 and 65 wt% of water.

Preferably said isocyanates are present in emulsified form. This ensures that the isocyanates in the glue are well distributed throughout the glue. When said isocyanates are present in emulsified form in the glue, lower amounts of isocyanates can be used to obtain board material with the desired characteristics, this because said isocyanates can be homogeneously spread upon the lignocellulosic material.

Preferably, the dispersion of said isocyanates in the glue, is such that 99 wt% of the isocyanates have a particle size/droplet size of less than 10 micrometer, preferably less than 5 micrometer, preferably less than 1 micrometer. This can be measured by laser scattering and/or dynamic light scattering.

The presence of isocyanates is beneficial for the water resistant properties of board material produced with this glue.

In a preferred embodiment said raw material is a powder comprising at least proteins and preferably also comprising carbohydrates. Said raw material could for example be a flour. This flour can be a fermented flour, a denaturated flour or a fermented and denaturated flour. Said powder is preferably the powder as described in the first aspect of the invention. Said flour is preferably the flour described in the first aspect of the invention. Such powder, for example such flour, is then added to water in the first step and dispersed. Preferably, water is present in a vessel comprising a mixing unit, and said raw material is added to said vessel and by said mixing unit dispersed in the water. When adding the raw material, the mixing unit is preferably already mixing such that the raw material is immediately mixed with the water and brought into dispersed form. The mixing unit is preferably completely located inside a vessel.

The raw material can also comprise polyamides which are obtained by polymerization of amino acids, for example hyperbranched polyamides such as hyperbranched polylysine. Said polyamides can be the polyamides described for the raw material of the first aspect of the invention.

Very preferably, the raw material is dispersed in water according to a ratio of the water to the raw material of between 0.75 and 3, preferably of at most 2,5 and/or preferably of at least 1. Such a ratio will allow the isocyanates to be dispersed into the water in a stable manner. Surprisingly, it has been found that with these ratio's the glue is very stable and has a good shelf life, e.g. a shelf life of more than 24 hours or more preferably of more than 5 days. With such an amounts of water, the isocyanates, for example the pMDI will not react with water in such a way that the reactivity of the pMDI is lost.

In a specific embodiment the first step comprises at least two substeps, being a first substep wherein raw material is dispersed in water and a second substep wherein additional components are added. Said additional components preferably comprise water glass, and more preferably is water glass. By adding water glass, and this before having the second step, it is ensured that the isocyanates get well dispersed into the first dispersion. The water glass preferably has the features as described for the water glass in the first aspect of the invention. The water glass is preferably the fourth component of the first aspect of the invention.

Other additional components that can be added during this method are additives, preferably additives chosen from the list of additives disclosed in the first aspect of the invention, among others:
- water-repellent additives;
- fire-retardant additives;
- wetting agents;
- denaturants;
- catalysts;
- hardeners;
- wax, e.g. a wax emulsion.

The benefits described for these additives in the first aspect of the invention apply mutatis mutandis. Said additives however, are preferably only added during the third step and this before, during and/or after adding of said tackifiers to the semi-finished glue. By applying said additives only in the third step, it is ensured that these additives cannot negatively influence dispersing of said isocyanates. The glue preferably comprises at most 3 wt% of said additives.

Preferably, if waterglass is present, for the glue, the weight ratio of the raw material to the total amount of water is between 0,68 and 2,95.

In a very specific embodiment the weight ratio tackifiers upon the total weight of the glue is between 0,5 % and 8 %.

The isocyanates are preferably chosen from the list of: di-isocyanates and multi-isocyanates, wherein the isocyanates preferably comprise polymeric methylene diphenyl diisocyanate (pMDI).

In a very preferred embodiment, in the further step, for example the third step, further additional additives are added, said additional additives preferably being chosen from the list of: water-repellent additives or fire-retardant additives or formaldehyde scavengers. Said formaldehyde scavengers can be the formaldehyde scavengers as disclosed in the first aspect of the invention and can be the fifth component of the first aspect of the invention.

In a specific embodiment use is made of a continuous mixing unit, wherein said continuous mixing unit continuously forms said glue. For example said first and second and third component as indicated in the first aspect of the invention are brought into this mixing unit in a continuous manner and in a continuous manner, formed glue is discharged from said mixing unit. The result is that the contact time between the first and second component in said mixing unit is limited, such that unwanted prepolymerisation can be kept low or can even be absent and such that the risk that the dispersed isocyanates, return to an undispersed state, is very low. With the aid of this method, board material with superior characteristics with regard to strength can be obtained in an economic manner. Preferably said first and second component are each separately brought into this mixing unit, for example are each applied with a pipe that directly connects to said mixing unit. However it is not excluded that said first component and second component are first brought together and subsequently are brought into said continuous mixing unit, e.g. said first component and said second component can each by applied by a separate pipe into a main pipe, which main pipe connects to said mixing unit. A continuous mixing unit can also be very well implemented in a continuous process. For example to form particle board material or wood fiberboard material, a continuous process is desirable. Further, with the aid of a continuous mixing unit, as opposed to a discontinuous mixing unit -e.g. a batch mixing unit-, the isocyanates will have similar contact times with the material of the first component, such that a very uniform glue can be produced and the glue-coated lignocellulosic material can be made uniformly. With the aid of said continuous mixing unit, the isocyanates are in dispersed form, preferably an emulsified form, such that even with low amounts of said isocyanates, the isocyanates are well distributed over the lignocellulosic material.

In another specific embodiment the method according to the second aspect of the invention makes use of a batch mixing unit, for example a vessel comprising a mixer.

Preferably said glue is used for lignocellulosic material. Said lignocellulosic material can comprise or be lignocellulosic particles. Said lignocellulosic particles can be chosen from the list of: wood chips, wood fibers, wood shavings, non-wood lignocellulosic fibers such as hemp fibers or flax fibers. The lignocellulosic material can comprise different types of lignocellulosic particles. With said glue, glue-coated lignocellulosic material is preferably formed, for example:
- glue-coated wood chips to form particle board;
- glue-coated wood fibers to form wood fiberboards, such as MDF or HDF;
- glue-coated wood shavings to form OSB;
- glue-coated flax fibers to form flax boards.

The lignocellulosic material can comprise or be wood veneers. For example glue-coated wood veneers can be used to form a plywood board comprising two or more wood veneers. Said wood veneers are then attached to each other with said glue, wherein said glue is for example sprayed or nebulized upon a said wood veneer. Preferably, a stack of veneer layers with said glue between two consecutive veneer layers is formed and pressed to form said plywood board.

The lignocellulosic material can also comprise paper sheets or cardboard sheets. High Pressure Laminates (HPL) are built up from several sheets, for example paper sheets or cardboard sheets, preferably glue-impregnated sheets. Compact laminate also comprises several glue-impregnated sheets, for example glue-impregnated paper sheets or cardboard sheets. Said glue-impregnated sheets can also be indicated as glue-coated sheets. For glue-impregnated sheets, said glue is present in the core of said sheets but often also upon the surfaces of said sheets. Said glue-impregnated sheets can each comprise one type of glue, but can also comprise two or more types of glues. For example a glue-impregnated sheet can be formed by impregnating said sheet with a first glue, optionally followed by further coating with again the first glue or with a second glue. Said first glue and/or said second glue can be a glue according to the first aspect of the invention. A HPL for example comprises several kraft papers, a decor paper -e.g. a printed paper or a paper with a uniform color -for example coloured in its mass with a uniform color- and optionally a protective translucent/transparent paper. Said papers are preferably glue-impregnated papers and said HPL is produced by pressing the various sheets of the HPL together under temperature and pressure, resulting in curing of the glue. At least one of the above-mentioned glue-impregnated sheets can be a glue-coated paper or cardboard obtained by using a glue according to the first aspect of the invention. For example, a said glue-impregnated sheet can be obtained by coating one or both of the outer surfaces of said sheets with a glue according to the first aspect of the invention and/or by transporting the sheet trough an impregnation bath comprising a glue according to the first aspect of the invention. If a said impregnation bath is used, said impregnation bath is preferably continuously replenished by glue, preferably in such a manner that the 'first in first out principle' for the glue is used. For example the sheet can be a paper layer and said glue can be sprayed upon at least one surface of the paper layer and/or said paper layer can be submerged in an impregnation bath comprising said glue. A HPL or compact laminate can only comprise glue-coated sheets which have been coated/impregnated with a glue according to the first aspect of the invention, however a HPL or compact laminate can also comprise glue-coated sheets impregnated and/or coated with another glue, for example a MF glue or a PF glue or an acrylate glue or a polyester glue. A HPL or compact laminate can also comprise glue-coated sheets which have been coated/impregnated with a glue according to the first aspect of the invention, which further comprise a second glue. For example the sheets can be impregnated with the glue of the first aspect of the invention and coated with another glue or said sheets can be first impregnated with a said another glue and then coated with the glue of the first aspect of the invention.

In a very preferred embodiment, use is made of a mixing unit for at least said second step, wherein said mixing unit is an emulsifying unit, such as an emulsifying homogenizer pump or a high shear mixer. With an emulsifying unit is indicated a unit which enhances/stimulates/enables dispersion, e.g. emulsification, of the isocyanates, e.g. the emulsification of the isocyanates into the water of the first dispersion. With the aid of an emulsifying homogenizer pump, additional pumps to pump the first dispersion and/or the isocyanates to the emulsifying unit, are not needed, such that less machinery is needed. Further, said emulsifying homogenizer pump is capable of regulating the emulsification of said isocyanates in a desired manner, capable a regulating the amounts of the first dispersion and the isocyanates, and is capable of forming a very homogeneous emulsification, such that with this method, very uniform glue can be obtained. With the aid of a high shear mixer, preferably a high shear in-line mixer, the particle size of the isocyanates can be very small, such that with very low amounts of isocyanates, strong board material can be obtained. The emulsifying units can also be ultrasonic mixers or high pressure homogenizers.

Instead of having an emulsifying unit, the mixing unit can also be a static mixer. For example if all the isocyanates are emulsifiable isocyanates such as eMDI, or the isocyanates comprise emulsifiable isocyanates, it is not necessary that said mixing unit further enhances emulsification. Of course, a static mixer will also contribute to the emulsification of the isocyanates. Of course, when having emulsifiable isocyanates, use can be made of such an emulsifying unit to further enhance emulsification.

According to a first variant of the second aspect of the invention, for example the third step, and more specifically adding the tackifiers to the semi-finished glue, is an optional feature. All the preferred embodiments of the method of the second aspect of the invention with regard to the first step, the step wherein the isocyanates are added and/or possible additives which are added, apply mutatis mutandis for the method of the first variant of the second aspect of the invention.

The invention also relates to a method for producing board material, wherein a first lignocellulosic material, for example lignocellulosic particles such as wood chips and/or wood fibers, and a first glue are brought together using a continuous gluing unit, such as a glue coater or a blowline or an impregnation bath or a glue spraying device, to form a first glue-coated lignocellulosic material, wherein said first glue-coated lignocellulosic material is pressed to form said board material, and wherein said first glue is a glue according to the invention.

All the above-mentioned specific and/or preferred embodiment of the (first variant of the) first aspect of the invention and/or the (first variant of the) second aspect of the invention therefore apply mutatis mutandis.

Preferably a cake comprising said first glue-coated lignocellulosic material is formed, and said cake is pressed by a pressing device comprising an un upper press element and a lower press element, wherein preferably a release agent is applied upon a surface of the upper press element and/or a surface of the lower press element and/or a surface of said cake, and this to avoid sticking of said first glue-coated lignocellulosic material to a said surface of the upper press element and/or lower press element. The presence of isocyanates can enhance the risk of sticking to the press element. By using a release agent, e.g. by spraying/nebulizing a release agent upon a said press element or upon the cake, or by using a release foil, said risk of sticking is reduced. In addition to a said release agent applied upon the surface of the press element and/or a release foil or instead of said release agent and/or release foil, a release agent, such as a soap solution, can be sprayed upon the surface of the glue-coated lignocellulosic material which will come into contact with a said press element, before pressing and this to avoid sticking. This soap solution could also be seen as an additive as indicated in the first aspect of the invention.

In a specific embodiment, a cake comprising at least three layers is formed, said three layers at least comprising two outer layers and at least one central layer located between said two outer layers, wherein said central layer comprises said first glue-coated lignocellulosic material and wherein said two outer layers comprise a second lignocellulosic material coated with a second glue, said second glue preferably being a glue comprising formaldehyde, such as urea formaldehyde glue or melamine urea formaldehyde glue, and wherein said cake is pressed by a pressing device comprising an un upper press element and a lower press element. Said outer layers can comprise lignocellulosic material coated with a second glue which is different from said first glue and preferably the second glue comprises formaldehyde, such as UF glue or MUF glue or MUPF glue or phenol formaldehyde glue (PF glue) or melamine formaldehyde glue (MF glue). By only having one or more central layers comprising said first glue-coated lignocellulosic material, use can be made of outer layers which have little risk of sticking to the said press elements. The second glue can comprise formaldehyde. The benefit of glues comprising formaldehyde, is that said outer layers are very suitable for further processing steps, for example for adhering other layers, such a resin-impregnated papers layers to said board material, e.g. to form decorative panels. Because only said outer layers comprise said second glue, and said one or more central layers comprise said first glue, formaldehyde emissions are low. Such a board material can for example be three-layered particle board with two outer layers and one central layers located between said two outer layers. Said outer layers preferably comprise finer wood chips, while said central layer comprises more coarse wood chips. When use is made of more coarse wood chips, less glue is needed and also a lighter core is obtained. A board material according to this embodiment, can be produced in a more economic material, since less isocyanates are necessary to obtain said board material and this while having still the desired characteristics with regard to formaldehyde emissions and/or bio-based material. Such a board material can also be a three layered wood fiber board, e.g. a three-layered MDF or HDF, with two outer layers with a glue comprising formaldehyde and a central layer located between said outer layers comprising said first glue-coated lignocellulosic material. The board material can be produced in a more economic material, since less isocyanates are necessary to obtain said board material and this while having still the desired characteristics with regard to formaldehyde emissions. Said second glue can also be a polyvinyl acetate glue, a polyurethane glue, a poly acrylate glue, a (polymeric) methylene difenyl di-isocyanate glue without said raw material comprising amino acids and/or molecules containing amino acids, a polyvinyl butyral (PVB) glue, a polyurethane (PUR) hotmelt, a polyester glue, a bio-based glue based on for example sugars, lignin, hyperbranched polyamides, etc.

Said outer layers, in another embodiment, can however also comprise a said first glue-coated lignocellulosic material glue. Here with first glue is indicated a first type of glue, e.g. being a glue that is made by mixing said first and second component together. This however does not mean that the composition of said first glue of the outer layer and the first glue of the central layer needs to be completely the same. It is possible that the weight distribution of the composition is different. Also the characteristics of the lignocellulosic material of the central layers and the outer layers can be different.

In a preferred embodiment, a cake comprising said first glue-coated lignocellulosic material is formed, and said cake is pressed by a pressing device comprising an un upper press element and a lower press element, and wherein before pressing by said pressing device, steam is applied trough said cake, for example by steam injection and/or vacuum, said steam preferably comprising at least 95 wt% of water, more preferably at least 99 wt% of water, most preferably 100 wt% of water. With the aid of said steam, said cake is preheated and also water is added to said cake. Said water and heat stimulate the curing of said first glue of the first glue-coated lignocellulosic material, such that pressing time can be reduced and this while still having a board material with the desired strength. Said board material can be produced in a very economic manner. For example steam can be supplied to the cake from the top to the bottom, such that gravity contributes to the flow of the steam. Steam can also be supplied form the top and from the bottom. Steam can also be supplied from the bottom to the top. Said steam preferably only comprises water. However said steam can comprise additives to further enhance the pressing and/or to improve the characteristics of the manufactured board material

In a specific embodiment of the invention, in addition to said lignocellulosic material, comminuted particles from waste comprising rigid foam is brought in said continuous gluing unit, and this to obtain glue-coated comminuted particles from waste comprising rigid foam.

In a variant of the invention, instead of lignocellulosic material, comminuted particles from waste comprising rigid foam is brought in said continuous gluing unit, and this to obtain glue-coated comminuted particles from waste comprising rigid foam. Isocyanates are well suited to connect comminuted particles from waste comprising rigid foam. The preferred and other described embodiments of the first and the second aspect and the third aspect of the invention apply mutatis mutandis for this variant.

The invention, according to a fourth aspect, also relates to a board material comprising lignocellulosic material and a glue according to the invention, wherein said board material is obtained by a method according to the invention.

Said board material is for example a particle board or a wood fiberboard. The board material comprises glue. Said glue is hardened/cured glue. In order to form this board material, use is made of a glue which has not yet hardened/cured or is not yet completely hardened/cured. During manufacturing said board material, the glue will (further) harden/cure so as to give a hardened/cured glue that bonds the lignocellulosic material together. The glue of the board material, means a glue that has undergone hardening/curing during forming of the board, is sufficiently dry and bonds the lignocellulosic material together. This does not mean per se that the glue is completely hardened/cured. Here, a hardened/cured glue may or may not be a fully hardened/cured glue.

Said board material can be a particle board or a wood fiberboard comprising at least three layers, namely two outer layers and at least one central layer located between said two outer layers, wherein said central layer and a said outer layers differ in one or more of the following:
- the amount of lignocellulosic material;
- the amount of glue;
- the type of lignocellulosic material, for example the lignocellulosic material of the central layer can be more coarse than the lignocellulosic material of the outer layer and/or the lignocellulosic material of the central layer can comprise more recycled lignocellulosic particles than the lignocellulosic material of the outer layer;
- the type of glue;
- the thickness.

For example the central layer can comprise said first glue according to the invention comprising said first component and said second component, e.g. said glue can comprise pMDI and/or eMDI. The outer layers can comprise a formaldehyde based glue such as UF glue, MUF glue or melamine formaldehyde, PF glue, MF glue or MUPF glue. To form said board material, preferably two gluing units are used, one unit wherein wood chips or wood fibers are brought in said gluing unit with a formaldehyde glue to form formaldehyde glue-coated wood chips or wood fibers, and another gluing unit wherein wood chips or wood fibers are brought together in said gluing unit with said first glue to form first glue-coated wood chips or wood fibers. A cake is formed on a transporting belt which connects to a pressing machine, said pressing machine for example comprising a prepress followed by a hot press, for example a double belt hot press, and then said cake is pressed by said pressing machine to form said board material. To form said cake, first a layer of formaldehyde glue-coated wood chips or wood fibers is scattered to form a first layer of the cake, after which a second layer of first glue-coated wood chips or wood fibers is scattered upon said first layer to form a second layer of the cake and then another layer of formaldehyde glue-coated wood chips or wood fibers is scattered upon the second layer to form a third layer of the cake. The benefit of such a board material is that formaldehyde emissions can be very low. Further formaldehyde scavengers can used to further reduce formaldehyde emissions. Said formaldehyde scavengers can be present as additives in said formaldehyde based glue and/or said scavengers can be scattered between a said first and second layer of the cake and/or between said second and third layer of the cake. Said scavengers can thus be present at the desired locations and perform their activity, namely removing/neutralizing harmful substances, at the desired places and this with as little possible negatively influencing other properties such as board characteristics and/or production conditions of said board. For example said formaldehyde scavengers can be located in such a way that said board material can be produced at high speed and this while the board material has the desired technical characteristics, such as internal bond, density, strength, etc. Since said glue of the central layer does not comprise formaldehyde, less formaldehyde scavengers are needed (or no formaldehyde scavengers are needed). Preferably said formaldehyde scavengers take up at most 1 weight percentage, more preferably at most 0,5 weight percentage, most preferably at most 0,25 weight percentage of the total dry matter weight of the obtained board material. For example the weight ratio of scavengers upon the glue of the outer layers is situated between 0,5 % and 15%, preferably between 2 % and 10 %.

The board material formed by the method according to the invention, can be the substrate of a panel, for example the substrate of a decorative panel, such as a floor panel, wall panel, furniture panel or the substrate of a construction panel. It has been found that, if the surface of a board material is made from said first glue-coated lignocellulosic material, said glue thus being said first glue, said surface is very well suited to attach a decorative layer to it. For example said decorative layer can be attached by pressing with heat and/or with the aid of an additional glue. Since this board material has low emissions of harmful substances and can have good technical properties, this board material is very suitable to form decorative panels. Said decorative top layers can comprise one or more resin impregnated papers, wherein the resin is for example a thermosetting resin such as a melamine resin or an acrylate resin. Of course, a said resin can also be a glue according to the first aspect of the invention comprising said first and second component, such that at least one of said resin impregnated papers is a glue-coated/impregnated paper coated/impregnated with a glue according to the first aspect of the invention. Said resin impregnated papers for example comprise a (digitally) printed paper and optionally a translucent/transparent paper (e.g. to form a wear layer). Said wear layer can comprise hard particles, such corundum, to provide for additional wear resistance. Said resin impregnated papers can have a uniform color. Said decorative top layer can also be a HPL (high pressure laminate) comprising, in addition to a said printed resin impregnated paper or said resin impregnated paper having a uniform color, one or more resin impregnated kraft papers. The resin of the resin impregnated kraft paper can be a phenol resin.

In a preferred embodiment a said decorative panel is rectangular and comprises two pairs of opposite edges, wherein said at least one substrate layer comprises an exposed portion at least at one of said edges.

Further preferably a said exposed portion is profiled and at least partially forms a first coupling part at the respective edge that allows said edge to be coupled to a second coupling part at the opposite edge of a similar decorative panel, wherein in the coupled condition a locking is obtained between the respective edges in a direction perpendicular to the plane of coupled panels and/or in the plane of coupled panels and perpendicular to the respective edges.

Percentages and amounts used when manufacturing said board material, e.g. with regard to the lignocellulosic material, the glue, the additives, are preferably expressed on the basis of the amounts of dry matter that were provided for manufacturing said board material. This is because during formation of the board the different components will react with each other and there is also evaporation of for example (during production formed) water. However, the formulation of the glue can be based on the total weight, this because the viscosity of the glue, e.g. the amount of water, can have big influence during manufacturing of the board material. If weight ratios of the glue are discussed, these are ratios based on the total weight of the glue, unless otherwise indicated.

In a specific embodiment the board material is a three-layered material. For this preferably at least three base layers are formed above each other, wherein at least one of said base layers consists of said first glue-coated lignocellulosic material. More preferably said three base layers are all a said first glue-coated lignocellulosic material. These three base layers are pressed together with for example the aid of a continuous press such as a continuous double belt press. Of course pressing can also be done with a discontinuous press. When use is made of a continuous press, a continuous line comprises said continuous press and preferably one or more strewers/scatterers to strew/scatter one or more or all of said base layers. Preferably said base layers are subsequently formed above each other, for example subsequently strewn/scattered above each other. Further said continuous line preferably comprises a bottom belt upon which the base layers are formed above each other and an upper belt, wherein said base layers are pressed together between said lower and upper belt.

Further preferably a sawing unit is present to saw said manufactured board material into boards. Said layers of the boards are thus respectively derived from said base layers.

Said board material as such can form a board. Preferably further process steps are performed upon said board material, such as sawing and/or sanding, to form said boards. The method for manufacturing board material is therefore also a method for manufacturing boards.

With the intention of better showing the characteristics of the invention, herein below, as an example without any limitative character, embodiments of the invention are described.

### Example 1

The particle board is a three-layered particle board with two outer layers and a central layer located between said outer layers. Said outer layers comprise wood chips which are finer, thus less coarse, then the wood chips of the central layer. The dosage of the glue upon the dry matter weight of the wood chips is different for the outer layers and the central layer, and also the composition of the glue is different.

| | Glue composition outer layer (wt%) | glue composition central layer (wt%) |
|---|---|---|
| flour powder, preferably pea flour powder | 18.4 | 23,0 |
| water | 53.5 | 48.1 |
| Water glass 2.0 (40% solids) | 5.7 | 8.7 |
| pMDI | 18.4 | 19.2 |
| glycerol | 4 | 1 |

The glue is formed as follows: The flour powder is dispersed in the water and forms a first component comprising said flour powder and the water, and as such forms the first component of the first aspect of the invention. The water glass is added to said first component as such forming a said first dispersion of the first step of the second aspect of the invention. Said water glass is the fourth component of the first aspect of the invention. A second component comprises the pMDI. Said pMDI is added to the first dispersion to form a semi-finished glue, and thus forms the second step of the second aspect of the invention, with the pMDI being the second component of the first aspect of the invention. Then said glycerol is added to the semi-finished glue, and thus forms the third step of the second aspect of the invention, with the glycerol being the third component of the first aspect of the invention. Further to form the glue-coated wood chips for the outer layers, 17,4 weight percentage of glue (total weight of the glue) upon dry matter wood chips is used, which corresponds to 6.8 weight percentage of dry matter glue upon dry matter wood chips. For the central layer, 10,4 weight percentage of glue (total weight of the glue) upon dry matter wood chips is used, which corresponds to 4,86 weight percentage of dry matter glue upon dry matter wood chips.

Said particle board can have a thickness of approximately 18 mm, a density of +/- 750 kg/m³ and a tensile strength of 0,37 N/m² measured according to EN 320:2011.

### Example 2

The particle board is a three-layered particle board with two outer layers and a central layer located between said outer layers. Said outer layers comprise wood chips which are finer, thus less coarse, then the wood chips of the central layer. The dosage of the glue upon the dry matter weight of the wood chips is different for the outer layers and the central layer, and also the composition of the glue is different.

| | Glue composition outer layer (wt%) | glue composition central layer (wt%) |
|---|---|---|
| flour powder, preferably pea flour powder | 16,3 | 19,6 |
| water | 58,5 | 53,0 |
| Water glass 2.0 (40% solids) | 5,9 | 8,8 |
| Carboxymethyl cellulose | 0,6 | 0,9 |
| pMDI | 18,7 | 17,7 |

The glue is formed as follows: The flour powder is dispersed in the water and forms a first component comprising said flour powder and the water, and as such forms the first component of the first aspect of the invention. The water glass is added to said first component as such forming a said first dispersion of the first step of the second aspect of the invention. Said water glass is the fourth component of the first aspect of the invention. A second component comprises the pMDI. Said pMDI is added to the first dispersion to form a semi-finished glue, and thus forms the second step of the second aspect of the invention, with the pMDI being the second component of the first aspect of the invention. Then said carboxymethyl cellulose is added to the semi-finished glue, and thus forms the third step of the second aspect of the invention, with the carboxymethylcellulose being the third component of the first aspect of the invention. Further to form the glue-coated wood chips for the outer layers, 17,1 weight percentage of glue (total weight of the glue) upon dry matter wood chips is used, which corresponds to 6.5 weight percentage of dry matter glue upon dry matter wood chips. For the central layer, 11,3 weight percentage of glue (total weight of the glue) upon dry matter wood chips is used, which corresponds to 4,7 weight percentage of dry matter glue upon dry matter wood chips.

Said particle board can have a thickness of approximately 18 mm, a density of +/- 725 kg/m³ and a tensile strength of 0,5 N/m² measured according to EN 320:2011.

### Example 3

The particle board is a three-layered particle board with two outer layers and a central layer located between said outer layers. Said outer layers comprise wood chips which are finer, thus less coarse, then the wood chips of the central layer. The dosage of the glue upon the dry matter weight of the wood chips is different for the outer layers and the central layer, and also the composition of the glue is different.

| | Glue composition outer layer (wt%) | glue composition central layer (wt%) |
|---|---|---|
| flour powder, preferably pea flour powder | 13,9 | 18,2 |
| water | 40,0 | 50,0 |
| Water glass 2.0 (40% solids) | 5,0 | 6,4 |
| Carboxymethyl cellulose | 0,5 | 0,0 |
| pMDI | 16,0 | 16,4 |
| PVAc | 0,0 | 4,0 |

The glue is formed as follows: The flour powder is dispersed in the water and forms a first component comprising said flour powder and the water, and as such forms the first component of the first aspect of the invention. The water glass is added to said first component as such forming a said first dispersion of the first step of the second aspect of the invention. Said water glass is the fourth component of the first aspect of the invention. A second component comprises the pMDI. Said pMDI is added to the first dispersion to form a semi-finished glue, and thus forms the second step of the second aspect of the invention, with the pMDI being the second component of the first aspect of the invention. Then said carboxymethyl cellulose or PVAc is added to the semi-finished glue, and thus forms the third step of the second aspect of the invention, with the carboxymethylcellulose or PVAc being the third component of the first aspect of the invention. Further to form the glue-coated wood chips for the outer layers, 15,1 weight percentage of glue (total weight of the glue) upon dry matter wood chips is used. For the central layer, 11,4 weight percentage of glue (total weight of the glue) upon dry matter wood chips is used.

Said particle board can have a thickness of approximately 12,5 mm, a density of +/- 710 kg/m³ and a tensile strength of 0,57 N/m² measured according to EN 320:2011.

The glue, for all the embodiments, can optionally comprise additives, wherein said additives preferably take up at most 3 weight percentage of the total weight of the glue, more preferably at most 3 weight percentage of the dry matter weight of the glue. The additives can be chosen from the list of:
- scavengers, such as formaldehyde scavengers;
- water-repellent additives;
- wax, for example paraffine wax;
- fire-retardant additives;
- wetting agents;
- denaturants;
- catalysts;
- hardeners.

The present invention is in no way limited to the herein above-described embodiments. On the contrary, such glue, methods and board material can be realized according to various variants, without leaving the scope of the present invention, as defined by the appended claims.

The invention also relates to the following list of items:
1. A glue for lignocellulosic material, wherein said glue is made up of several components, said components at least comprising:
   - a first component which is a dispersion of at least a raw material comprising amino acids and/or molecules containing amino acids, in water;
   - a second component comprising isocyanates;
   characterized in that said components comprise a third component, said third component comprising tackifiers, said tackifiers preferably being chosen from the list of: glycerol, polyamides, carboxymethyl cellulose, polyvinyl acetate and lignosulfonate.
2. The glue according to item 1, wherein the raw material comprises a powder, said powder comprising at least proteins and preferably also comprising carbohydrates.
3. The glue according to item 2, wherein the powder is a flour.
4. The glue according to item 2 or 3, wherein, for the first component, the weight ratio of the water to the powder is between 0,75 and 3, preferably at most 2,5 and/or preferably at least 1.
5. The glue according to any of the preceding items, wherein the raw material comprises polyamides which are obtained by polymerization of amino acids, for example hyperbranched polyamides such as hyperbranched polylysine.
6. The glue according to any of the preceding items, wherein, for the glue, the weight ratio of the first component is between 65 and 85 wt%, wherein preferably said first component consists of the raw material and water.
7. The glue according to any of the preceding items, wherein, for the glue, the weight ratio of the second component is between 15 and 25 wt%, wherein preferably the second component consists of said isocyanates.
8. The glue according to any of the preceding items, wherein the glue comprises a fourth component, said fourth component being waterglass.
9. The glue according to any of the preceding items, wherein the weight ratio tackifiers upon the total weight of the glue is between 0,5 % and 8 %.
10. The glue according to any of the preceding items, wherein the glue comprises a fifth component, different from said other components, wherein said fifth component comprises formaldehyde scavengers.
11. The glue according to any of the preceding items, wherein the isocyanates are chosen from the list of: di-isocyanates and multi-isocyanates, wherein the isocyanates preferably comprise polymeric methylene diphenyl diisocyanate (pMDI).
12. The glue according to any of the preceding items, wherein the isocyanates are present in dispersed form in the glue.
13. The glue according to any of the preceding items, wherein the glue comprises additives, such as water-repellent additives and/or fire-retardant additives.
14. The glue according to any of the preceding items, wherein the tackifiers comprise polyvinyl acetate.
15. A method for manufacturing a glue for lignocellulosic material, wherein said method comprises at least the following steps:
   - a first step wherein at least a raw material comprising amino acids and/or molecules containing amino acids, is dispersed in water, to form a first dispersion;
   - further steps wherein isocyanates and tackifiers are dispersed in said first dispersion, to form said glue;

   wherein said further steps preferably comprise:
      - a second step wherein the isocyanates are dispersed in said first dispersion, to form a semi-finished glue;
      - a third step wherein the tackifiers are added to said semi-finished glue to form said glue;
   wherein said tackifiers are preferably chosen from the list of: glycerol, hyperbranched polyamides, carboxymethyl cellulose, polyvinyl acetate and lignosulfonate.
16. The method according to item 15, wherein said raw material is a powder comprising at least proteins and preferably also comprising carbohydrates.
17. The method according to item 16, wherein the raw material is a flour.
18. The method according to any of the preceding item 15 to 17, wherein the raw material comprises polyamides which are obtained by polymerization of amino acids, for example hyperbranched polyamides such as hyperbranched polylysine.
19. The method according to any of the preceding items 15 to 18, wherein, the raw material is dispersed in water according to a weight ratio of the water to the raw material of between 0,75 and 3, preferably of at most 2,5 and/or preferably of at least 1.
20. The method according to any of the preceding items 15 to 19, wherein the first step comprises at least two substeps, being a first substep wherein said raw material is dispersed in water and a second substep wherein additional components are added.
21. The method according to item 20, wherein said additional components comprise water glass.
22. The method according to any of the preceding items 15 to 21, wherein the weight ratio tackifiers upon the total weight of the glue is between 0,5 % and 8 %.
23. The method according to any of the preceding items 15 to 22, wherein the isocyanates are chosen from the list of: di-isocyanates and multi-isocyanates, wherein the isocyanates preferably comprise polymeric methylene diphenyl diisocyanate (pMDI).
24. The method according to any of the preceding items 15 to 23, wherein in the further steps, for example in said third step, further additional components are added, said additional components preferably being chosen from the list of: water-repellent additives or fire-retardant additives or formaldehyde scavengers.
25. The method according to any of the preceding items 15 to 24, wherein a glue according to any of the preceding items 1 to 14 is manufactured.
26. A method for producing board material, wherein a first lignocellulosic material, for example lignocellulosic particles such as wood chips and/or wood fibers, and a first glue are brought together to form a first glue-coated lignocellulosic material, wherein said first glue-coated lignocellulosic material is pressed to form said board material, and wherein said first glue is a glue according to any of the preceding items 1 to 14 and/or a glue manufactured according to any of the preceding items 15 to 25.
27. The method according to item 26, wherein a cake comprising said first glue-coated lignocellulosic material is formed, and said cake is pressed by a pressing device comprising an un upper press element and a lower press element, wherein preferably a release agent is applied upon a surface of the upper press element and/or a surface of the lower press element and/or a surface of said cake, and this to avoid sticking of said first glue-coated lignocellulosic material to a said surface of the upper press element and/or lower press element.
28. The method according to item 26 or 27, wherein a cake comprising said first glue-coated lignocellulosic material is formed, and said cake is pressed by a pressing device comprising an un upper press element and a lower press element, and wherein before pressing by said pressing device, steam is applied trough said cake, for example by steam injection and/or vacuum, said steam preferably comprising at least 95 wt% of water.
29. A board material comprising lignocellulosic material and a glue comprising isocyanates, wherein said board material is obtained by a method according to any of the preceding items 26 to 28, and wherein said board material is for example a particle board material or a wood fiberboard material.

## Claims

1. A glue for lignocellulosic material, wherein said glue is made up of several components, said components at least comprising:
- a first component which is a dispersion of at least a raw material comprising amino acids and/or molecules containing amino acids, in water;
- a second component comprising isocyanates;
**characterized in that** said components comprise a third component, said third component comprising tackifiers, said tackifiers preferably being chosen from the list of: glycerol, polyamides, carboxymethyl cellulose, polyvinyl acetate and lignosulfonate.

2. The glue according to claim 1, wherein the raw material comprises a powder, said powder comprising at least proteins and preferably also comprising carbohydrates, wherein said powder is preferably a flour.

3. The glue according to claim 2, wherein, for the first component, the weight ratio of the water to the powder is between 0,75 and 3, preferably at most 2,5 and/or preferably at least 1.

4. The glue according to any of the preceding claims, wherein the raw material comprises polyamides which are obtained by polymerization of amino acids, for example hyperbranched polyamides such as hyperbranched polylysine.

5. The glue according to any of the preceding claims, wherein, for the glue, the weight ratio of the first component is between 65 and 85 wt%, wherein preferably said first component consists of the raw material and water and/or the weight ratio of the second component is between 15 and 25 wt%, wherein preferably the second component consists of said isocyanates.

6. The glue according to any of the preceding claims, wherein the glue comprises a fourth component, said fourth component being waterglass.

7. The glue according to any of the preceding claims, wherein the weight ratio tackifiers upon the total weight of the glue is between 0,5 % and 8 %.

8. The glue according to any of the preceding claims, wherein the glue comprises a fifth component, different from said other components, wherein said fifth component comprises formaldehyde scavengers.

9. The glue according to any of the preceding claims, wherein the isocyanates are chosen from the list of: di-isocyanates and multi-isocyanates, wherein the isocyanates preferably comprise polymeric methylene diphenyl diisocyanate (pMDI), and wherein preferably the isocyanates are present in dispersed form in the glue.

10. A method for manufacturing a glue for lignocellulosic material, wherein said method comprises at least the following steps:
- a first step wherein at least a raw material comprising amino acids and/or molecules containing amino acids, is dispersed in water, to form a first dispersion;
- further steps wherein isocyanates and tackifiers are dispersed in said first dispersion, to form said glue;
wherein said further steps preferably comprise:
- a second step wherein the isocyanates are dispersed in said first dispersion, to form a semi-finished glue;
- a third step wherein the tackifiers are added to said semi-finished glue to form said glue;
wherein said tackifiers are preferably chosen from the list of: glycerol, hyperbranched polyamides, carboxymethyl cellulose, polyvinyl acetate and lignosulfonate.

11. The method according to claim 10, wherein said raw material is a powder comprising at least proteins and preferably also comprising carbohydrates, wherein preferably the raw material is a flour.

12. The method according to any of the preceding claim 10 to 11, wherein the raw material comprises polyamides which are obtained by polymerization of amino acids, for example hyperbranched polyamides such as hyperbranched polylysine.

13. The method according to any of the preceding claims 10 to 12, wherein, the raw material is dispersed in water according to a weight ratio of the water to the raw material of between 0,75 and 3, preferably of at most 2,5 and/or preferably of at least 1.

14. The method according to any of the preceding claims 10 to 13, wherein the first step comprises at least two substeps, being a first substep wherein said raw material is dispersed in water and a second substep wherein additional components are added, wherein preferably said additional components comprise water glass.

15. The method according to any of the preceding claims 10 to 14, wherein the weight ratio tackifiers upon the total weight of the glue is between 0,5 % and 8 %.
